# EUROPÄISCHE PATENTANMELDUNG

(11) **EP 1 433 962 A1**
(43) Veröffentlichungstag der Anmeldung: **30.06.2004**
(21) Anmeldenummer: 03019224.9
(22) Anmeldetag: 26.08.2003
(51) Int. Cl.: F16B 7/10, E04B 1/24

(54) **Profilträgersystem**

(30) Priorität: 31.08.2002 DE 10240309
(71) Anmelder: Amazonen-Werke H. Dreyer GmbH & Co. KG, 49205 Hasbergen (DE)
(72) Erfinder: Pollex, Jorg, 04229 Leipzig (DE); Pokriefke, Michael, 044229 Leipzig (DE)

(57) **Zusammenfassung**

Teleskopierbares Profilträgersystem, bestehend aus einem Außenrohr und einem Innenrohr, die ineinander einschiebbar und auseinander ziehbar sind, wobei das Außenrohr ein rechteckiges Innenquerschnittsprofil aufweist und das Innenrohr zumindest vier Außenlängskantenbereiche besitzt, die mit den Innenlängskantenbereiches des Außenrohres zusammenwirken, wobei das Innenrohr auf zumindest einem Teil seiner Außenseiten in Längsrichtung des Innenrohres verlaufende nutähnliche Einschnürungen aufweist.

## Beschreibung

Die Erfindung betrifft ein Profilträgersystem, bestehend aus einem Außenrohr und einem Innenrohr, die ineinander einschiebbar und auseinanderziehbar sind, sowie ein Verfahren zur Herstellung eines zumindest auf zwei gegenüberliegenden Längsseiten eine in Längsrichtung eines Vierkantrohres oder Mehrkantrohres verlaufenden Einschnürungen aufweisenden Profilträgers.

Teleskopierbare Profilträgersysteme, die aus einem Außenrohr und einem Innenrohr bestehen und ineinander einschiebbar und ausziehbar sind, sind bekannt. Derartige Profilträgersysteme bestehen aus teuren Rohrverbindungen, wobei die Rohrquerschnitte aufeinander abgestimmt sein müssen.

Ohne weiteres lassen handesübliche und kostengünstige Profile nicht verwenden. Kostengünstige Vierkantrohre sind in der Regel geschweißt ausgeführt und weisen an der Innenseite eine Schweißnaht auf, die für die Teleskopfunktion sehr hinderlich ist. Gleichzeitig gibt es in den Abstufungen der einzelnen Profile nach Norm- oder Händlervorschriften in der Regel keine kombinierbaren Abmessungen von preiswerten Rohren, die eine Schiebeverbindung mit relativ geringem Spiel ermöglichen würden.

Der Erfindung liegt die Aufgabe zugrunde, aus preiswerten, vorzugsweise geschweißten Profilrohren ein gute Teleskopierund Schiebeeigenschaften aufweisendes Profilträgersystem sowie als Klemmprofil zu verwendende Profilträger zu schaffen.

Diese Aufgabe wird erfindungsgemäß durch die Merkmale des Patentanspruches 1 oder durch ein Verfahrens des Patentanspruches 7 gelöst.

Infolge dieser Maßnahmen wird durch die nutähnliche Einschnürung ein Freiraum geschaffen, in welche die Schweißnaht des Außenrohres eintauchen kann. Aufgrund der Einschnürung am Innenschieberohr kann auch bei einer störenden Schweißnaht an der Innenseite des Außenrohres aus vorhandenen, handelsüblichen Profilabmessungen je nach gewählter Stärke der Einschnürung ein entsprechendes teleskopierbares Profilträgersystem geschaffen werden. Es ergibt sich je nach gewählter Stärke der Einschnürung ein entsprechendes Ecken- und Außenmaß und damit eine Anpassung an die Abmessung des Außenrohres. Als weiterer Vorteil ergibt sich, dass die Biegesteifigkeit des Innenrohres erhöht wird.

Damit ein gutes Verschieben der beiden Rohre des Profilträgersystems mit einem geringen Spiel erreicht wird, ist vorgesehen, dass die Ausmaße des Innenrohres auf die Innenmaße des Außenrohres abgestimmt sind. Dieses erfolgt durch eine entsprechend Größe der Einschnürung.

Ein gutes teleskopierbares Profilträgersystem, welches wenig Spiel aufweist, wird dadurch erreicht, dass durch die Größe der Einschnürungen die Ausmaße des Innenrohres an die Innenmaße des Außenrohres anpassbar sind.

Die Einschnürungen des Innenrohres oder für einen Profilträger lassen sich durch die Merkmale nach dem Verfahrensanspruch 7 erreichen.

Die Einschnürungen können mittels eines auf eine Seite jeweils einwirkenden Pressvorganges erreicht werden.

Es ist jedoch auch möglich zur Rationalisierung, insbesondere wenn keine hohen Passgenauigkeiten erreicht werden müssen, dass die Einschnürungen durch einen Pressvorgang von gegeneinander wirkenden Werkzeugelementen hergestellt werden.

Das durch die Einschnürung geschaffene Profilrohr kann auch als Klemmprofil verwendet werden. Mit entsprechend ausgeformten Klemmelementen lassen sich an dem profilierten Rohr Bauelemente und Bauteile leicht anklemmen

Weitere Einzelheiten der Erfindung sind den übrigen Unteransprüchen, der Beispielsbeschreibung und den Zeichnungen zu entnehmen. Hierbei zeigen
- Fig. 1: die nicht ineinander teleskopierbaren Innen- und Außenrohre im Schnitt und in Prinzipdarstellung,
- Fig. 2: die ineinander teleskopierbaren Innen- und Außenrohre im Längsschnitt und in Prinzipdarstellung nach der Erfindung,
- Fig. 3: das Außenrohr in Seitenansicht,
- Fig. 4: das mit Einschnürungen versehene Rohr in Seitenansicht,
- Fig. 5: die Teleskopverbindung in Seitenansicht,
- Fig. 6: ein Werkzeug zur Einschnürung in Seitenansicht,
- Fig. 7: ein weiteres Werkzeug ausschnittsweise und in Seitenansicht,
- Fig. 8: ein weiteres Werkzeug zur Einschnürung in Seitenansicht,
- Fig. 9: das Prinzip der Einschnürung in Prinzipdarstellung,
- Fig. 10: ein weiteres Prinzip der Einschnürung in Prinzipdarstellung,
- Fig. 11: ein weiteres Prinzip der Einschnürung eines Rohres in Prinzipdarstellung und
- Fig. 12: ein weiteres Prinzip der Einschnürung eines Rohres in Prinzipdarstellung.

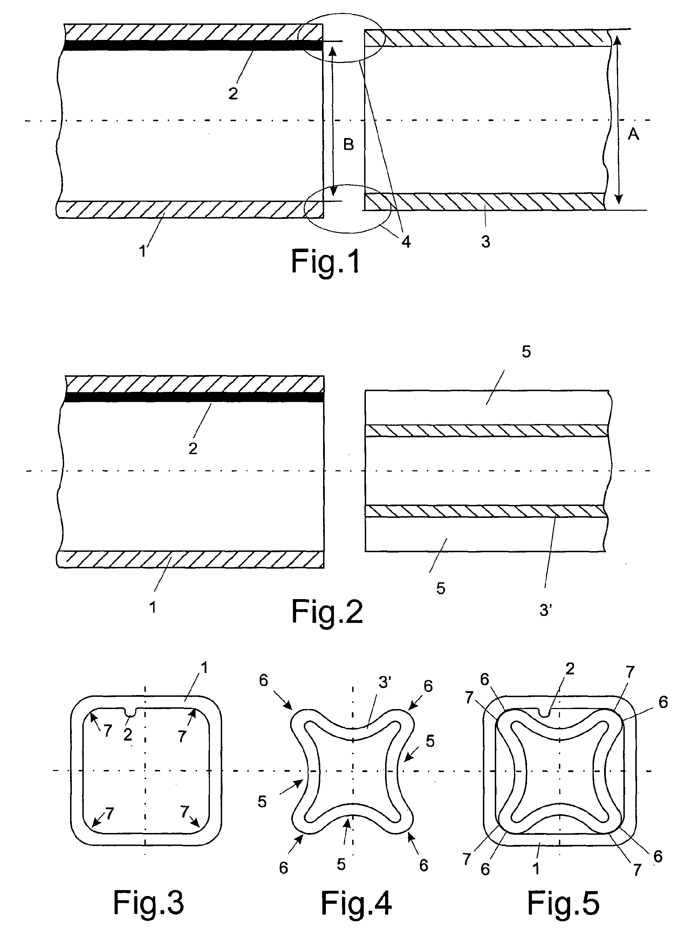

Die Fig. 1 zeigt das Außenrohr 1, welches als Vierkantrohr ausgebildet ist mit der Schweißnaht 2 und das einen kleineren Außendurchmesser aufweisendende Innenrohr 3 auf. Diese in Fig. 1 dargestellte Rohrpaarung lässt sich jedoch nicht ineinander einschieben, weil das Rohr 3 zu große Außenmaße 1 im Bezug auf das Innenmaß des Außenrohres 1 aufweist. Dieses ist durch die Kreise 4 deutlich hervorgehoben, dass diese Maße A und I eine Teleskopierbarkeit nicht ermöglichen.

Um dennoch aus diesen beiden Rohren 1 und 2 eine teleskopierbare Schieberohrpaarung zu machen, werden die Außenmaße A des Rohres 3 durch Einschnürungen 5, wie die Fig. 2 und 4 zeigen, verkleinert. Ein derartig durch Einschnürungen 5 verkleinertes Mehrkantrohr 3', hier ein Quadratprofil, lässt sich dieses in das Quadratrohr 1 gemäß Fig. 1, 2 und 3 einschieben, wie Fig. 5 zeigt. Somit sind das Außen- 1 und Innenrohr 3' zueinander einschiebbar und ausziehbar. Das Innenrohr 3' besitzt vier Außenlängskantenbereiche 6, die mit den Innenlängskantenbereiche 7 des Außenrohres 1 zusammenwirken. Hierbei weist jeder Längskantenbereich 6,7 zwei Anlagestellen auf, die mit entsprechenden Anlagestellen des anderen Rohres zusammenwirken. Die Anpassung der Außenmaße A des Innenrohres 3, 3' an die Innenmaße I des Außenrohres 1 werden durch die nutähnlichen Einschnürungen 5 erzielt. Hiermit sind dann die Außenmaße A des Innenrohres 3' auf die Innenmaße I des Außenrohres 1 abgestimmt. Die Einschnürungen 5 auf den gegenüberliegenden Seiten des Innenrohres 3' sind zumindest annähernd gleich ausgebildet. Durch die Größe der Einschnürungen 5 sind die Außenmaße A des Innenrohres 3' an die Innenmaße I des Außenrohres 1 anzupassen. Die Schweißnaht 2 liegt, wie Fig. 5 zeigt, im Bereich einer Einschnürung 5 eines Innenrohres 3'. Somit können das Außenrohr 1 und auch das Innenrohr 3 aus einem in Längsrichtung des Rohre geschweißten Profil bestehen. Somit ergibt sich ein teleskopierbares Profilträgersystem.

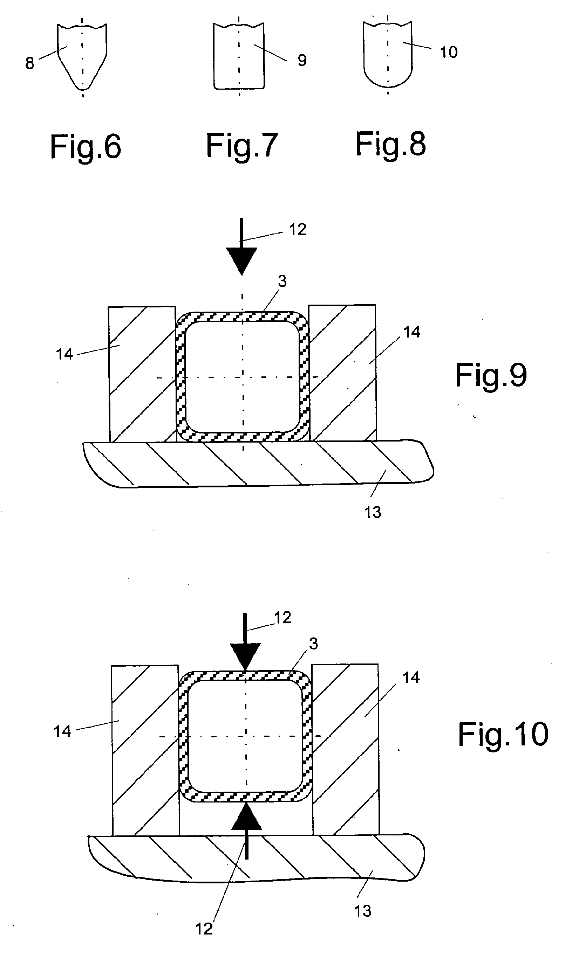

Die Einschnürungen 5 des Rohres 3' werden durch einen Pressvorgang auf einer herkömmlichen Presse mittels der im Querschnitt beispielhaft dargestellten Querschnitte der Werkzeuge 8,9,10 nach den Figuren 6,7,8 oder ähnlicher Querschnittsformen hergestellt.

Wenn hohe Fertigungsgenauigkeiten und Toleranzen erreicht werden sollen, wird nach dem Einschnürungsprinzip nach Fig. 9 gearbeitet. Hierbei ist das Werkzeug, das durch den Pfeil 12 symbolisiert. Das einzuschiebende Rohr wird auf einen Presstisch 13 einer Presse gelegt und seitlich durch die Führungen 14 oder Abstützungen geführt. Durch das Werkzeug 12 von oben wird eine erste Einschnürung vorgenommen. Anschließend wird das Rohr gedreht und auf der Gegenseite ebenfalls eine Einschnürung vorgenommen. Nach einer weiteren Drehung wird auf einer anderen Seite, die noch nicht mit der Einschnürung versehen ist, in gleicher Weise durch das Werkzeug die Einschnürung vorgenommen und ein letztes Mal wird das Rohr gedreht und anschließend auf der noch nicht eingeschnürten Seite das Rohr ebenfalls durch das Werkzeug eingeschnürt. Die erforderlichen Einschnürungstiefen werden in Versuchsreihen ermittelt. Notfalls wird durch Nachpressvorgänge das genaue Maß erreicht.

In Fig. 10 ist ein weiteres Prinzip der Einschnürung dargestellt, wobei durch ein von unten und oben wirksames Presswerkzeug wir durch die Pfeile symbolisiert ist zwei gegenüberliegende Seiten des Rohres 3 gleichzeitig eingeschnürt werden. Die Einschnürung der beiden anderen gegenüberliegenden Seiten erfolgt dadurch, dass zunächst das Rohr um 90° gedreht wird und anschließend durch einen Pressvorgang durch die beiden Werkzeuge diese beiden Seiten eingeschnürt werden.

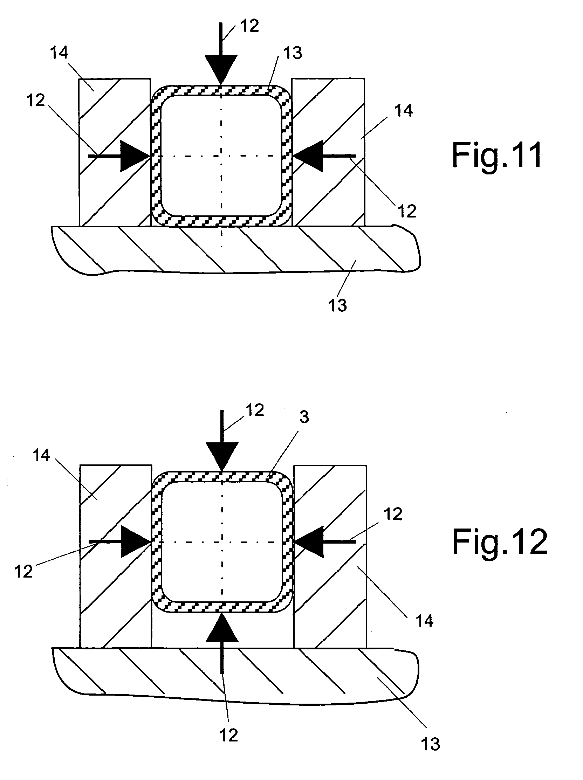

Die Fig. 11 zeigt ein weiteres Prinzip, wobei gleichzeitig drei Seiten des Rohres 3 eingeschnürt werden. Die andere Seite wird dann in einem separaten Vorgang eingeschnürt.

Die Fig. 12 zeigt das Prinzip der gleichzeitigen Einschnürung von vier Seiten des Rohres 3.

Das Rohr 3', welches die Einschnürungen 5 aufweist, lässt sich gut als Klemmprofil verwenden.

## Patentansprüche

1. Teleskopierbares Profilträgersystem, bestehend aus einem Außenrohr (1) und einem Innenrohr (3'), die ineinander einschiebbar und auseinander ziehbar sind, wobei das Außenrohr (1) ein rechteckiges Innenquerschnittsprofil aufweist und das Innenrohr zumindest vier Außenlängskantenbereiche (6) besitzt, die mit den Innenlängskantenbereiches (7) des Außenrohres (1) zusammenwirken, wobei das Innenrohr (3) auf zumindest einem Teil seiner Außenseiten in Längsrichtung des Innenrohres (3') verlaufende nutähnliche Einschnürungen (5) aufweist.

2. Profilträgersystem nach Anspruch 1, **dadurch gekennzeichnet, dass** die Außenmaße (A) des Innenrohres (3') auf die Innenmaße (I) des Außenrohres (1) abgestimmt sind.

3. Profilträgersystem nach Anspruch 1, **dadurch gekennzeichnet, dass** Außenrohr (1) einen quadratischen Innenquerschnitt aufweist.

4. Profilträgersystem nach Anspruch 1, **dadurch gekennzeichnet, dass** die Einschnürungen (5) auf den gegenüberliegenden Seiten des Außenrohres (1) zumindest annähernd gleich ausgebildet sind.

5. Profilträgersystem nach Anspruch 1, **dadurch gekennzeichnet, dass** durch die Größe der Einschnürungen (5) die Außenmaße (A) des Innenrohres (3) an die Innenmaße (I) es Außenrohres (1) anpassbar sind.

6. Profilträgersystem nach Anspruch 1, **dadurch gekennzeichnet, dass** das Außenrohr (1) und/oder das Innenrohr (3') aus einem in Längsrichtung des Rohres (1,3') geschweißten Profil besteht.

7. Verfahren zur Herstellung eines zumindest auf zwei gegenüberliegenden Längsseiten eine in Längsrichtung eines Vierkantrohres oder Mehrkantrohres (3') verlaufende Einschnürung (5) aufweisenden Profilträgers, wobei die Einschnürung (5) durch einen Pressvorgang mittels Werkzeugelementen (8,9,10) hergestellt wird.

8. Verfahren nach Anspruch 7, **dadurch gekennzeichnet, dass** die Einschnürung (5) durch einen Pressvorgang von gegeneinander wirkenden Werkzeugelementen (8,9,10) hergestellt werden.
